# EUROPEAN PATENT SPECIFICATION

(11) **EP 4 243 518 B1**
(45) Date of publication and mention of the grant of the patent: **04.03.2026**
(21) Application number: 20966337.6
(22) Date of filing: 23.12.2020
(51) Int. Cl.: H04W 56/00, H04B 7/26, H04B 10/00

(54) **TIME-DELAY COMPENSATION METHOD AND DEVICE**
VERFAHREN UND VORRICHTUNG ZUR ZEITVERZÖGERUNGSKOMPENSATION
PROCÉDÉ ET DISPOSITIF DE COMPENSATION DE RETARD TEMPOREL

(43) Date of publication of application: 13.09.2023
(73) Proprietor: Huawei Technologies Co., Ltd., Shenzhen, Guangdong 518129 (CN)
(72) Inventor: REN, Qiongtao, Shenzhen, Guangdong 518129 (CN); HU, Hongqiang, Shenzhen, Guangdong 518129 (CN)
(74) Representative: Maiwald GmbH
(86) International application number: PCT/CN2020/138457
(87) International publication number: WO 2022/133757

(56) References cited:
- EP-A1- 2 173 136
- EP-A2- 2 597 790
- CN-A- 102 869 086
- CN-A- 103 428 125
- CN-A- 110 213 797
- US-A1- 2018 076 914
- US-A1- 2020 322 908

## Description

### TECHNICAL FIELD

Embodiments of this application relate to the communication field, and in particular, to a delay compensation method and a device.

### BACKGROUND

An indoor distributed system is a technology for indoor users, and provides mobile communication network coverage inside buildings. Current indoor distributed coverage costs are high. Different operators share network devices to reduce networking costs. For example, devices of a plurality of operators access local network devices in a radio frequency feeding mode.

In an indoor distributed system in a conventional technology, a third-party network device is used as a signal source to access the local network device, and each channel of independent signals sent by the signal source are transmitted to the local network device through an independent radio frequency cable. Due to causes such as different lengths of the signal source or the radio frequency cable, there is a delay difference between signals received by the local network device from different radio frequency lines, that is, time of air interface signals of the local network device cannot be aligned, resulting in poor data transmission performance of different network devices in a multiple-input multiple-output (multiple-in multiple-out, MIMO) mode.

European patent application EP 2 597 790 A2 describes a delay measurement method in which a delay of transporting service data from a first optical transport network device to a second optical transport network device is acquired and, according to the delay, residence time of the service data in the optical transport network is adjusted so that the time is equal to a preset reference delay.

United States patent application US 2018/0076914 A1 describes a method and a passive optical network for supporting a mobile network.

### SUMMARY

Embodiments of this application provide a delay compensation method, to perform delay compensation on signals of different radio frequency lines, and eliminate a delay difference between the signals of the different radio frequency lines. Embodiments of this application further provide a corresponding device, a corresponding computer-readable storage medium, a corresponding computer program product, and the like.

The invention is set out in the appended set of claims.

A first aspect of embodiment of this application provides a delay compensation method, including: A first network device obtains at least one piece of first timing information of at least one radio frequency line of a second network device. One radio frequency line corresponds to one piece of first timing information. The first network device determines target timing information based on the first timing information and second timing information. The second timing information is satellite time service information of the first network device, and the target timing information indicates a reference value for performing compensation on a signal of the at least one radio frequency line. The first network device determines at least one compensation difference between the at least one piece of first timing information and the target timing information. The first network device performs, based on the at least one compensation difference, delay compensation on a signal of a radio frequency line that corresponds to the compensation difference and that is in the at least one radio frequency line.

In this embodiment of this application, the first network device performs, by using the compensation difference, delay compensation on signals of different radio frequency lines that access the first network device, to eliminate a signal delay difference on the different radio frequency lines. This aligns signal delays of the different radio frequency lines, and improves performance of a network system.

In a possible implementation, the first network device calculates a delay difference between the at least one piece of first timing information and the second timing information. The first network device selects, from the delay difference of the at least one radio frequency line, first timing information corresponding to a maximum value as the target timing information.

In this embodiment of this application, the first network device may use timing information corresponding to the maximum value in the delay difference of each radio frequency line as the target timing information. This improves implementability of the solution.

In a possible implementation, the first network device sorts the delay differences of the different radio frequency lines that access the first network device.

In a possible implementation, the first network device calculates a delay difference between the at least one piece of first timing information and the second timing information. The first network device selects the target timing information from a preset value. The target timing information is greater than or equal to first timing information corresponding to a maximum value in the at least one delay difference.

In this embodiment of this application, the target timing information may alternatively be selected from the preset value. This improves flexibility of the solution.

In a possible implementation, the first network device searches, based on frequency information, for a synchronization signal SS and/or a broadcast signal PBCH sent by the second network device. The SS and/or the PBCH are/is alternately sent by the second network device through the at least one radio frequency line. The first network device parses the SS and/or the PBCH to obtain the at least one piece of first timing information of the at least one radio frequency line.

In this embodiment of this application, the first network device may obtain the first timing information from a synchronization signal block sent by the second network device. This improves implementability of the solution.

In a possible implementation, the first network device buffers the signal of the at least one radio frequency line. Duration of the buffering is determined based on the compensation difference corresponding to the radio frequency line.

In this embodiment of this application, a compensation difference corresponding to a signal buffered on each radio frequency line is aligned with the signal delay of the different radio frequency lines, to eliminate the delay difference on the different radio frequency lines.

In a possible implementation, the first network device is a distributed antenna system control unit (DAS control unit, DCU), and the second network device is a third-party RRU.

A second aspect of the embodiment of this application provides a network device, including:

A receiving unit is configured to obtain at least one piece of first timing information of at least one radio frequency line of a second network device. One radio frequency line corresponds to one piece of first timing information.

A processing unit is configured to determine target timing information based on the first timing information and second timing information. The second timing information is satellite time service information of the first network device, and the target timing information indicates a reference value for performing compensation a signal of the at least one radio frequency line. The processing unit is further configured to determine at least one compensation difference between the at least one piece of first timing information and the target timing information. The processing unit is further configured to perform, based on the at least one compensation difference, delay compensation on the signal of the radio frequency line that corresponds to the compensation difference and that is in the at least one radio frequency line.

In a possible implementation, the processing unit is specifically configured to calculate a delay difference between the at least one piece of first timing information and the second timing information, and select, from the delay difference of the at least one radio frequency line, first timing information corresponding to a maximum value as the target timing information.

In a possible implementation, the processing unit is specifically configured to calculate the delay difference between the at least one piece of first timing information and the second timing information, and select the target timing information from a preset value. The target timing information is greater than or equal to the first timing information corresponding to the maximum value in the at least one delay difference.

In a possible implementation, the receiving unit is specifically configured to search, based on frequency information, for a synchronization signal SS and a broadcast signal PBCH sent by the second network device. The SS and the PBCH are alternately sent by the second network device through the at least one radio frequency line. The receiving unit is specifically configured to parse the SS and the PBCH to obtain the at least one piece of first timing information of the at least one radio frequency line.

In a possible implementation, the processing unit is specifically configured to buffer the signal of the at least one radio frequency line. Duration of the buffering is determined based on the compensation difference corresponding to the radio frequency line.

A third aspect of the embodiment of this application provides a network system, including a first network device and a second network device. The first network device is configured to perform the method in the first aspect, and the second network device is configured to perform an operation performed by the second network device in the method in the first aspect.

A fourth aspect of the embodiment of this application provides a digital processing chip. The chip includes a processor and a memory, the memory and the processor are interconnected through a line, the memory stores instructions, and the processor is configured to perform the method in the first aspect.

A fifth aspect of the embodiment of this application provides a computer-readable storage medium. The computer-readable storage medium stores a program, and when a computer executes the program, the method in the first aspect is performed.

A sixth aspect of the embodiment of this application provides a computer program product, and when the computer program product runs on a computer, the computer performs the method in the first aspect.

### BRIEF DESCRIPTION OF DRAWINGS

FIG. 1a is a schematic diagram of an architecture of a network system according to an embodiment of this application;
FIG. 1b is a schematic diagram of an architecture of another network system according to an embodiment of this application;
FIG. 2 is a schematic diagram of a delay compensation method according to an embodiment of this application;
FIG. 3 is a schematic diagram of another compensation method according to an embodiment of this application;
FIG. 4 is a schematic diagram of a structure of a network device according to an embodiment of this application; and
FIG. 5 is a schematic diagram of a structure of another network device according to an embodiment of this application.

### DESCRIPTION OF EMBODIMENTS

Embodiments of this application provide a delay compensation method, to perform delay compensation on signals of different radio frequency lines.

The following clearly and completely describes the technical solutions in embodiments of this application with reference to the accompanying drawings in embodiments of this application. It is clear that the described embodiments are merely a part but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word "example" or "for example" is for representing giving an example, an illustration, or a description. Any embodiment or design scheme described as an "example" or "for example" in embodiments of this application should not be explained as being more preferred or having more advantages than another embodiment or design scheme. To be precise, the word such as "example" or "for example" is intended to present a related concept in a specific manner.

In the following, a part of terms in this application are described, to help a person skilled in the art have a better understanding.

A distributed antenna system (Distributed Antenna System, DAS) is a mobile communication network formed by a plurality of spatially separated antenna nodes connected to a plurality of signal sources through a plurality of signal transmission media in a scheduled space or building. The distributed antenna system can evenly distribute signals of a mobile communication base station in each corner of a room, ensuring ideal signal coverage in an indoor area.

The distributed antenna system control unit (DAS control unit, DCU) is also referred to as an access combining unit. The access combining unit converts a radio frequency signal of the signal source into an optical signal. The optical signal is distributed to a remote unit inside a building through an optical fiber. The remote unit converts the optical signal into the radio frequency signal to provide network coverage inside the building. For example, the remote unit is a remote radio unit (remote radio unit, RRU).

A radio frequency line is for carrying transmission of the radio frequency signal. The radio frequency line is also referred to as a feeder. Performance of a radio frequency device is related to performance of the radio frequency line. The radio frequency device includes an antenna, a remote radio unit RRU, and the like.

The following describes a network architecture and an application scenario of embodiments of this application.

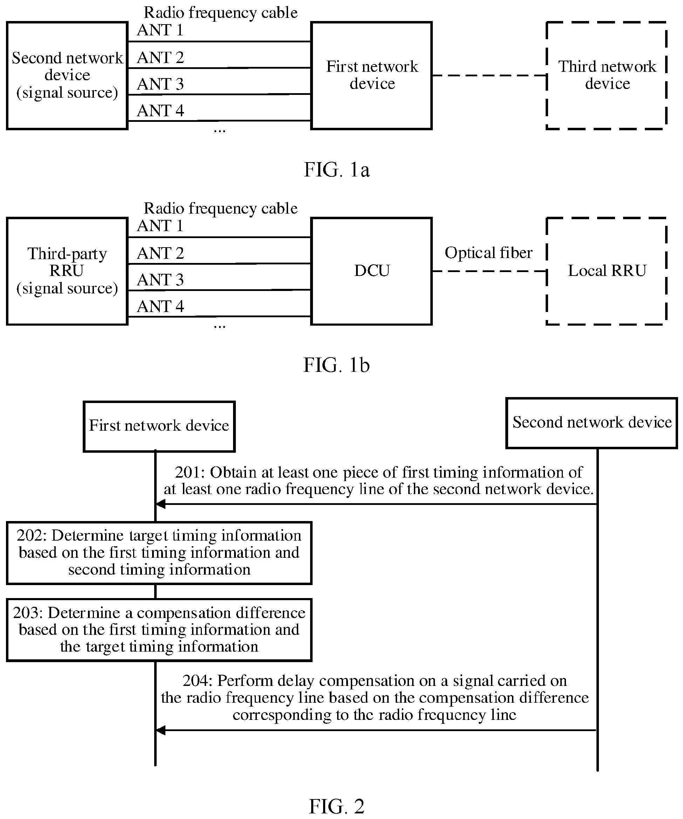

FIG. 1a is a schematic diagram of an architecture of a network system according to an embodiment of this application. The network system includes a first network device and a second network device. The first network device is a device that a signal source accesses through a radio frequency line, that is, a radio frequency feeding device. For example, the first network device may be a DCU, or may be a base band processing unit (base band unit, BBU). The first network device is configured to receive and process a radio frequency signal sent by the signal source.

The second network device shown in FIG. 1a is the signal source, and is connected to the second network device through a radio frequency line. The second network device sends the radio frequency signal to the first network device through a plurality of radio frequency lines. The second network device has a plurality of antenna ports, for example, an ANT 1, an ANT 2, ..., and each antenna port corresponds to one radio frequency line. The second network device may be a macro base station, a micro base station, or a repeater. This is not limited. Specifically, the second network device is, for example, a third-party RRU or a base transceiver station (base transceiver station, BTS).

The network architecture in embodiments of this application may further include a third network device. The third network device and the second network device may be connected through an optical fiber. The third network device is configured to receive a signal sent by the second network device, and the signal may be an optical signal. Specifically, after the second network device receives the radio frequency signal sent by the first network device, the second network device converts the radio frequency signal into the optical signal and sends the optical signal to the third network device. The third network device may provide signal coverage inside a building. For example, the third network device may be a local RRU, a local pRRU, or the like.

The following describes the network system provided in embodiments of this application by using an example in which the first network device is the DCU, the second network device is the third-party RRU, and the third network device is the local RRU. The network system is used in an indoor distributed antenna system.

FIG. 1b is an example of a network system according to an embodiment of this application. A third-party RRU serves as a signal source and is connected to a DCU through a radio frequency line, and a plurality of antenna ports of the third-party RRU are separately connected to the DCU through a plurality of the radio frequency lines. The third-party RRU sends a radio frequency signal to the DCU through different radio frequency lines. There is a delay in transmission of radio frequency signals on radio frequency lines. Due to a difference between the third-party RRU and the different radio frequency lines, delays of the radio frequency signals carried on the radio frequency lines are different.

After the DCU receives the radio frequency signal sent by the third-party RRU, the DCU may measure and calculate signals of the different radio frequency lines, and may perform delay compensation on the signals based on a measurement and calculation result. After receiving the radio frequency signal, the DCU converts the radio frequency signal into an optical signal and sends the optical signal to a local RRU through an optical fiber. The local RRU provides network coverage inside a building.

In the foregoing network system, the DCU may perform delay compensation on the signals of the different radio frequency lines, alternatively, after the signal is sent to the local RRU, the local RRU may perform delay compensation on the signal. Both the DCU and the local RRU may be used as a delay compensation point for the signals of the different radio frequency lines.

FIG. 2 is a schematic flowchart of a delay compensation method according to an embodiment of this application. The delay compensation method provided in this embodiment of this application includes but is not limited to the following steps.

201: A first network device obtains at least one piece of first timing information of at least one radio frequency line of a second network device.

The first network device obtains the at least one piece of first timing information of the at least one radio frequency line of the second network device. One radio frequency line corresponds to one piece of timing information. Specifically, the first network device searches, based on frequency information, for a synchronization signal

(synchronization signal, SS) and/or a broadcast signal (physical broadcast channel, PBCH) sent by the second network device. The second network device alternately sends the SS and/or the PBCH through the at least one radio frequency line. The first network device may obtain the first timing information of the radio frequency line by parsing the SS and/or the PBCH sent by the second network device, and each radio frequency line has corresponding first timing information.

Table 1 shows a time-frequency structure of the SS and the PBCH in a 3GPP protocol. In Table 1, 1 represents a number of a time domain symbol, and k represents a number of a frequency domain subcarrier of each part in a synchronization signal block.

**Table 1**

| Channel or signal (Channel or signal) | Orthogonal frequency division multiplexing identification number 1 of a start synchronization signal block (OFDM symbol number 1 relative to the start of an SS/PBCH block) | Subcarrier identification number k of the start synchronization signal block (Subcarrier number k relative to the start of an SS/PBCH block) |
|---|---|---|
| Primary synchronization signal (PSS) | 0 | 56, 57, ..., and 182 |
| Secondary synchronization signal (SSS) | 2 | 56, 57, ..., and 182 |
| Set to 0 (Set to 0) | 0 | 0, 1, ..., and 55, and 183, 184, ..., and 239 |
| | 2 | 48, 49, ..., and 55, and 183, 184, ..., and 191 |
| Broadcast signal block (PBCH) | 1 and 3 | 0, 1, ..., and 239 |
| | 2 | 0, 1, ..., and 47 |
| | | 192, 193, ..., and 239 |
| Modulation reference signal (DM-RS for PBCH) for the broadcast signal block | 1 and 3 | 0 + v, 4 + v, 8 + v, ..., and 236 + v |
| | 2 | 0 + v, 4 + v, 8 + v, ..., and 44 + v |
| | | 192 +v, 196 +v, ..., and 236 + v |

In an example, a DCU searches, based on the configured frequency information, for the SS and/or the PBCH sent by a third-party RRU. The third-party RRU alternately sends the SS and/or the PBCH through different radio frequency lines. The DCU may parse the received SS and/or PBCH to obtain the first timing information of a corresponding radio frequency line.

202: The first network device determines target timing information based on the first timing information and second timing information.

The first network device determines the target timing information based on the first timing information and the second timing information. The first timing information indicates basic timing for receiving or sending a signal by the first network device, and includes basic timing for sending the SS and/or the PBCH by the first network device. The second timing information is satellite time service information of the first network device, the second timing information indicates local timing for receiving or sending a signal by the first network device, and the target timing information indicates a reference value for performing compensation on a signal of the at least one radio frequency line. The first network device may determine the target timing information based on the first timing information and the second timing information in a plurality of manners. The following separately describes the manners.

1. The first network device uses first timing information corresponding to a maximum value in a delay difference between the first timing information and the second timing information as the target timing information.

The first network device traverses the radio frequency line of the second network device to obtain a plurality of pieces of first timing information of a plurality of radio frequency lines. One radio frequency line corresponds to one piece of first timing information. The first network device compares the first timing information of each radio frequency line with the second timing information. The second timing information is the satellite time service information of the first network device, and a difference between the first timing information and the second timing information is a delay difference of the radio frequency line in which the first timing information is located. After obtaining the delay difference of each radio frequency line, the first network device sorts the delay differences. The first network device uses the first timing information corresponding to the maximum value in the delay difference as the target timing information. The target timing information may be used as the reference value for the first network device to perform delay compensation on the signal of each radio frequency line.

2. The first network device selects the target timing information from a preset value.

The first network device may alternatively select the target timing information from the preset value. The preset value may be set by a user. The preset value selected by the first network device is greater than or equal to first timing information corresponding to a maximum value in the delay difference between the first timing information and the second timing information. The first network device may select the target timing information from the preset value. The target timing information is greater than or equal to the first timing information corresponding to the maximum value in the at least one delay difference.

In an example, the DCU obtains the first timing information of each radio frequency line from synchronization signals sent by the third-party RRU through the different radio frequency lines. The first timing information indicates basic timing for sending the synchronization signal by the third-party RRU. The DCU compares the obtained first timing information with the second timing information. The second timing information is the satellite time service information of the DCU. A difference between the first timing information and the second timing information is the delay difference of the signal on the radio frequency line corresponding to the first timing information. Each radio frequency line corresponds to one delay difference. The DCU uses the first timing information corresponding to the maximum value in the delay difference as the target timing information.

203: The first network device determines a compensation difference based on the first timing information and the target timing information.

The first network device determines at least one compensation difference between the at least one piece of first timing information and the target timing information. Specifically, the first network device compares the first timing information with the target timing information. A difference between the first timing information and the target timing information is the compensation difference of the radio frequency line corresponding to the first timing information. Each radio frequency line corresponds to one compensation difference.

In an example, the DCU compares the first timing information of each radio frequency line with the target timing information, to determine the compensation difference of each radio frequency line.

204: The first network device performs delay compensation on the signal of the radio frequency line based on the compensation difference.

The first network device performs, based on the at least one compensation difference, delay compensation on a signal of a radio frequency line that corresponds to the compensation difference and that is in the at least one radio frequency line. Specifically, the first network device receives the signal sent by the second network device through the different radio frequency lines, and the first network device buffers the signal. Duration of buffering is determined based on the compensation difference corresponding to the radio frequency line.

In an example, the DCU performs delay compensation on the signal of each radio frequency line based on the compensation difference determined in step 203. After receiving the signal of each radio frequency line, the DCU buffers the signal based on the compensation difference corresponding to the radio frequency line. Duration of the buffering is determined based on the compensation difference corresponding to the radio frequency line.

In this embodiment of this application, the first network device may perform, based on the compensation difference of each radio frequency line, delay compensation on the signal carried on the radio frequency line. Alternatively, the first network device may send the signal carried on the radio frequency line and a corresponding compensation difference to a third network device, and the third network device performs delay compensation on the signal of each radio frequency line based on the compensation difference. This is not specifically limited.

In this embodiment of this application, the first network device performs, by using the compensation difference, delay compensation on the signal of the different radio frequency lines that access the first network device, to eliminate a signal delay difference on the different radio frequency lines, so that signal delays of the different radio frequency lines are aligned, construction requirements of a network device on a signal source and the radio frequency line are reduced, a low delay requirement in an application scenario such as carrier aggregation is met, and performance of a network system is improved.

The following describes a delay compensation method provided in embodiments of this application by using a DCU as a first network device, a third-party RRU as a second network device, and a local RRU as a third network device.

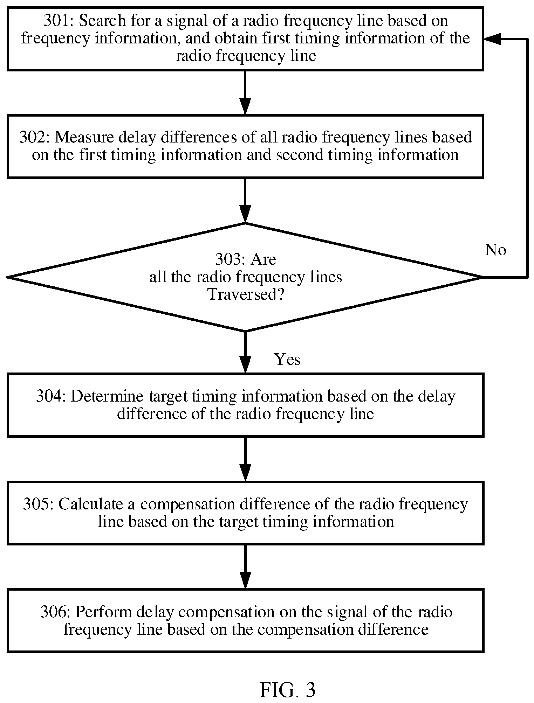

FIG. 3 is a schematic flowchart of another delay compensation method according to an embodiment of this application. The delay compensation method provided in this embodiment of this application includes but is not limited to the following steps.

301: Search for a signal of a radio frequency line based on frequency information, and obtain first timing information of the radio frequency line.

A DCU searches, based on the configured frequency information, for an SS and a PBCH sent by a third-party RRU through different radio frequency lines. The DCU parses the SS and/or the PBCH on each radio frequency line, and obtains the first timing information of each radio frequency line. The first timing information may indicate basic timing of an access signal that is sent by the third-party RRU and that is received by the DCU. Each radio frequency line corresponds to one antenna channel, and each antenna channel corresponds to one cell.

302: Measure delay differences of all radio frequency lines based on the first timing information and second timing information.

The DCU measures the delay difference of all the radio frequency lines based on the first timing information and the second timing information. The second timing information is satellite time service information of the DCU, that is, local absolute timing information of the DCU. The second timing information may indicate local timing when the DCU receives the access signal, and the DCU may calculate the delay difference of each radio frequency line by comparing the first timing information with the second timing information.

303: Determine whether all the radio frequency lines are traversed.

The DCU determines whether all the radio frequency lines are traversed. Specifically, the DCU determines whether comparing timing information of each radio frequency line with the second timing information is completed, to determine the delay difference of each radio frequency line. If the comparing is completed, step 304 is performed. If the comparing is not completed, step 301 is performed.

304: Determine target timing information based on the delay difference of the radio frequency line.

The DCU sorts the delay differences of all the radio frequency lines, and selects the first timing information of a radio frequency line with a largest delay difference as the target timing information. The target timing information may be used as a reference value for performing delay compensation on each radio frequency line.

In another example, the DCU may select the target timing information from a preset value. The selected target timing information is greater than or equal to a maximum value in the delay differences of all the radio frequency lines.

305: Calculate a compensation difference of the radio frequency line based on the target timing information.

The DCU calculates a delay compensation difference of each radio frequency line based on the target timing information. Specifically, the DCU compares the delay difference of each radio frequency line measured in step 302 with the target timing information, to calculate the compensation difference between the delay difference of each radio frequency line and the target timing information.

306: Perform delay compensation on the signal of the radio frequency line based on the compensation difference.

The DCU performs delay compensation on the signal of each radio frequency line based on the compensation difference of each radio frequency line, to eliminate a delay difference on the radio frequency line on which the third-party RRU performs transmission, and align a delay on each radio frequency line. Specifically, after receiving the signal of each radio frequency line, the DCU buffers the signal. Duration of buffering is determined based on the compensation difference of each radio frequency line.

In another example, after receiving the signal of each radio frequency line, the DCU sends the signal of each radio frequency line and a corresponding compensation difference to a local RRU. After receiving the signal, the local RRU performs delay compensation on the signal based on the corresponding compensation difference.

The foregoing describes the delay compensation method provided in embodiments of this application. The following describes an apparatus in embodiments of this application.

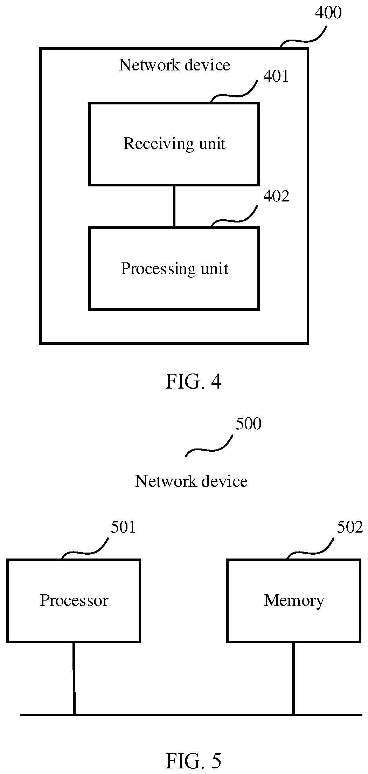

FIG. 4 is a schematic diagram of a first network device 400 according to an embodiment of this application. An embodiment of the first network device 400 according to embodiments of this application includes:

A receiving unit 401 is configured to obtain at least one piece of first timing information of at least one radio frequency line of a second network device. One radio frequency line corresponds to one piece of first timing information.

A processing unit 402 is configured to determine target timing information based on the first timing information and second timing information. The second timing information is satellite time service information of a first network device, and the target timing information indicates a reference value for performing compensation on a signal of the at least one radio frequency line. The processing unit 402 is further configured to determine at least one compensation difference between the at least one piece of first timing information and the target timing information. The processing unit 402 is further configured to perform, based on the at least one compensation difference, delay compensation on a signal of a radio frequency line that corresponds to the compensation difference and that is in the at least one radio frequency line.

In a possible implementation, the processing unit 402 is specifically configured to calculate a delay difference between the at least one piece of first timing information and the second timing information, and select, from the delay difference of the at least one radio frequency line, first timing information corresponding to a maximum value as the target timing information.

In a possible implementation, the processing unit 402 is specifically configured to calculate the delay difference between the at least one piece of first timing information and the second timing information, and select the target timing information from a preset value. The target timing information is greater than or equal to timing information corresponding to a maximum value in the at least one delay difference.

In a possible implementation, the receiving unit 401 is specifically configured to search, based on frequency information, for a synchronization signal SS and a broadcast signal PBCH sent by the second network device. The SS and the PBCH are alternately sent by the second network device through the at least one radio frequency line. The receiving unit 401 is specifically configured to parse the SS and the PBCH to obtain the at least one piece of first timing information of the at least one radio frequency line.

In a possible implementation, the processing unit 402 is specifically configured to buffer the signal of the at least one radio frequency line. Duration of the buffering is determined based on the compensation difference corresponding to the radio frequency line.

The following describes a structure of a network device provided in this application with reference to FIG. 5. FIG. 5 is a schematic diagram of a structure of an embodiment of the network device according to this application.

The network device 500 shown in this embodiment includes a processor 501 and a memory 502. The memory 502 is configured to store program instructions and data.

In this embodiment of this application, the processor 501 may be a general-purpose processor, a digital signal processor, an application-specific integrated circuit, a field-programmable gate array or another programmable logic device, a discrete gate or transistor logic device, or a discrete hardware component, and may implement or perform the methods, steps, and logic block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware and software units in the processor.

Program code executed by the processor 501 to implement the foregoing method may be stored in the memory 502. The memory 502 is coupled to the processor 501. The coupling in this embodiment of this application may be an indirect coupling or a communication connection between apparatuses, units, or modules in an electrical form, a mechanical form, or another form, and is for information exchange between the apparatuses, the units, or the modules. The processor 501 may operate with the memory 502. The memory 502 may be a non-volatile memory, for example, a hard disk drive (hard disk drive, HDD), or may be a volatile memory (volatile memory), for example, a random access memory (random access memory, RAM). The memory 502 is any other medium that can carry or store expected program code in a form of instructions or a data structure and that can be accessed by a computer, but is not limited thereto.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. A part of or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk drive, a read-only memory (ROM, read-only memory), a random access memory (RAM, random access memory), a magnetic disk, or an optical disc.

## Claims

1. A delay compensation method, comprising:
obtaining, by a first network device (400), at least one piece of first timing information of at least one radio frequency line of a second network device (400), wherein one radio frequency line corresponds to one piece of first timing information;
determining, by the first network device (400), target timing information based on the first timing information and second timing information, wherein the second timing information is satellite time service information of the first network device (400), and the target timing information indicates a reference value for performing delay compensation on a signal of the at least one radio frequency line;
determining, by the first network device (400), at least one compensation difference between the at least one piece of first timing information and the target timing information; and
performing, by the first network device (400) based on the at least one compensation difference, delay compensation on a signal of a radio frequency line that corresponds to the compensation difference and that is in the at least one radio frequency line,
wherein the obtaining, by a first network device (400), at least one piece of first timing information of at least one radio frequency line of a second network device (400) comprises:
searching, by the first network device (400) based on frequency information, for a synchronization signal SS and/or a broadcast signal PBCH sent by the second network device (400), wherein the SS and/or the PBCH are/is alternately sent by the second network device (400) through the at least one radio frequency line; and
parsing, by the first network device (400), the SS and/or the PBCH to obtain the at least one piece of first timing information of the at least one radio frequency line.

2. The method according to claim 1, wherein the determining, by the first network device (400), target timing information based on the first timing information and second timing information comprises:
calculating, by the first network device (400), a delay difference between the at least one piece of first timing information and the second timing information; and
selecting, by the first network device (400) from the delay difference of the at least one radio frequency line, first timing information corresponding to a maximum value as the target timing information.

3. The method according to claim 1, wherein the determining, by the first network device (400), target timing information based on the first timing information and second timing information comprises:
calculating, by the first network device (400), a delay difference between the at least one piece of first timing information and the second timing information; and
selecting, by the first network device (400), the target timing information from a preset value, wherein the target timing information is greater than or equal to first timing information corresponding to a maximum value in the at least one delay difference.

4. The method according to any one of claims 1 to 3, wherein the performing, by the first network device (400) based on the at least one compensation difference, delay compensation on a signal of a radio frequency line corresponding to each of the at least one radio frequency line comprises:
buffering, by the first network device (400), the signal of the at least one radio frequency line, wherein duration of the buffering is determined based on the compensation difference corresponding to the radio frequency line.

5. A network device (400), comprising:
a receiving unit (401), configured to obtain at least one piece of first timing information of at least one radio frequency line of a second network device (400), wherein one radio frequency line corresponds to one piece of first timing information; and
a processing unit (402), configured to determine target timing information based on the first timing information and second timing information, wherein the second timing information is satellite time service information of a first network device (400), and the target timing information indicates a reference value for performing compensation on a signal of the at least one radio frequency line, wherein
the processing unit (402) is further configured to determine at least one compensation difference between the at least one piece of first timing information and the target timing information; and
the processing unit (402) is further configured to perform, based on the at least one compensation difference, delay compensation on a signal of a radio frequency line that corresponds to the compensation difference and that is in the at least one radio frequency line,
wherein the receiving unit (401) is specifically configured to:
search, based on frequency information, for a synchronization signal SS and a broadcast signal PBCH sent by the second network device (400), wherein the SS and the PBCH are alternately sent by the second network device (400) through the at least one radio frequency line; and
parse the SS and the PBCH to obtain the at least one piece of first timing information of the at least one radio frequency line.

6. The network device (400) according to claim 5, wherein the processing unit (402) is specifically configured to:
calculate a delay difference between the at least one piece of first timing information and the second timing information; and
select, from the delay difference of the at least one radio frequency line, first timing information corresponding to a maximum value as the target timing information.

7. The network device (400) according to claim 5, wherein the processing unit (402) is specifically configured to:
calculate a delay difference between the at least one piece of first timing information and the second timing information; and
select the target timing information from a preset value, wherein the target timing information is greater than or equal to first timing information corresponding to a maximum value in the at least one delay difference.

8. The network device (400) according to any one of claims 5 to 7, wherein the processing unit (402) is specifically configured to:
buffer the signal of the at least one radio frequency line, wherein duration of the buffering is determined based on the compensation difference corresponding to the radio frequency line.

9. A network system, wherein the network system comprises a first network device (400) and a second network device (400), wherein
the first network device (400) is configured to perform the method according to any one of claims 1 to 4, and the second network device (400) is configured to perform an operation performed by the second network device (400) in the method according to any one of claims 1 to 4.

10. A digital processing chip, wherein the chip comprises a processor (501) and a memory (502), the memory (502) and the processor (501) being interconnected through a line, the memory (502) storing instructions, and the processor (501) being configured to perform the method according to any one of claims 1 to 4.

11. A computer-readable storage medium, comprising instructions which, when executed by a computer, cause the computer to carry out the method according to any one of claims 1 to 4.

12. A computer program product comprising instructions which, when the program is executed by a computer, cause the computer to carry out the method according to any one of claims 1 to 4.

## Patentansprüche

1. Verfahren zur Verzögerungskompensation, umfassend:
Erlangen mindestens einer ersten Zeitsteuerungsinformation von mindestens einer Hochfrequenzleitung einer zweiten Netzwerkvorrichtung (400) durch eine erste Netzwerkvorrichtung (400), wobei eine Hochfrequenzleitung einer ersten Zeitsteuerungsinformation entspricht;
Bestimmen von Zielzeitsteuerungsinformationen durch die erste Netzwerkvorrichtung (400) basierend auf den ersten Zeitsteuerungsinformationen und den zweiten Zeitsteuerungsinformationen, wobei die zweiten Zeitsteuerungsinformationen Satellitenzeitdienstinformationen der ersten Netzwerkvorrichtung (400) sind, und die Zielzeitsteuerungsinformationen einen Referenzwert zum Durchführen einer Verzögerungskompensation an einem Signal der mindestens einen Hochfrequenzleitung angeben;
Bestimmen mindestens einer Kompensationsdifferenz zwischen der mindestens einen ersten Zeitsteuerungsinformation und den Zielzeitsteuerungsinformationen durch die erste Netzwerkvorrichtung (400); und
Durchführen einer Verzögerungskompensation an einem Signal einer Hochfrequenzleitung, die der Kompensationsdifferenz entspricht und sich in der mindestens einen Hochfrequenzleitung befindet, durch die erste Netzwerkvorrichtung (400) basierend auf der mindestens einen Kompensationsdifferenz,
wobei das Erlangen von mindestens einer ersten Zeitsteuerungsinformation von mindestens einer Hochfrequenzleitung einer zweiten Netzwerkvorrichtung (400) durch eine erste Netzwerkvorrichtung (400) Folgendes umfasst:
Suchen nach einem Synchronisationssignal SS und/oder einem Rundfunksignal PBCH, das durch eine zweite Netzwerkvorrichtung (400) gesendet wird, durch die erste Netzwerkvorrichtung (400) basierend auf Frequenzinformationen, wobei das SS und/oder das PBCH abwechselnd durch die zweite Netzwerkvorrichtung (400) über die mindestens eine Hochfrequenzleitung gesendet wird/werden; und
Analysieren des SS und/oder des PBCH durch die erste Netzwerkvorrichtung (400), um die mindestens eine erste Zeitsteuerungsinformation der mindestens einen Hochfrequenzleitung zu erlangen.

2. Verfahren nach Anspruch 1, wobei das Bestimmen von Zielzeitsteuerungsinformationen durch die erste Netzwerkvorrichtung (400) basierend auf den ersten Zeitsteuerungsinformationen und zweiten Zeitsteuerungsinformationen Folgendes umfasst:
Berechnen einer Verzögerungsdifferenz zwischen der mindestens einen ersten Zeitsteuerungsinformation und den zweiten Zeitsteuerungsinformationen durch die erste Netzwerkvorrichtung (400); und
Auswählen erster Zeitsteuerungsinformationen entsprechend einem Maximalwert als die Zielzeitsteuerungsinformationen durch die erste Netzwerkvorrichtung (400) aus der Verzögerungsdifferenz der mindestens einen Hochfrequenzleitung.

3. Verfahren nach Anspruch 1, wobei das Bestimmen von Zielzeitsteuerungsinformationen durch die erste Netzwerkvorrichtung (400) basierend auf den ersten Zeitsteuerungsinformationen und zweiten Zeitsteuerungsinformationen Folgendes umfasst:
Berechnen einer Verzögerungsdifferenz zwischen der mindestens einen ersten Zeitsteuerungsinformation und den zweiten Zeitsteuerungsinformationen durch die erste Netzwerkvorrichtung (400); und
Auswählen der Zielzeitsteuerungsinformationen durch die erste Netzwerkvorrichtung (400) aus einem voreingestellten Wert, wobei die Zielzeitsteuerungsinformationen größer oder gleich den ersten Zeitsteuerungsinformationen entsprechend einem Maximalwert in der mindestens einen Verzögerungsdifferenz sind.

4. Verfahren nach einem der Ansprüche 1 bis 3, wobei das Durchführen einer Verzögerungskompensation an einem Signal einer Hochfrequenzleitung entsprechend jeder der mindestens einen Hochfrequenzleitung durch die erste Netzwerkvorrichtung (400) basierend auf der mindestens einen Kompensationsdifferenz Folgendes umfasst:
Puffern des Signals der mindestens einen Hochfrequenzleitung durch die erste Netzwerkvorrichtung (400), wobei die Dauer des Pufferns basierend auf der Kompensationsdifferenz entsprechend der Hochfrequenzleitung bestimmt wird.

5. Netzwerkvorrichtung (400), umfassend:
eine Empfangseinheit (401), die dazu konfiguriert ist, mindestens eine erste Zeitsteuerungsinformation von mindestens einer Hochfrequenzleitung einer zweiten Netzwerkvorrichtung (400) zu erlangen, wobei eine Hochfrequenzleitung einer ersten Zeitsteuerungsinformation entspricht; und
eine Verarbeitungseinheit (402), die dazu konfiguriert ist, Zielzeitsteuerungsinformationen basierend auf den ersten Zeitsteuerungsinformationen und zweiten Zeitsteuerungsinformationen zu bestimmen, wobei die zweiten Zeitsteuerungsinformationen Satellitenzeitdienstinformationen einer ersten Netzwerkvorrichtung (400) sind, und die Zielzeitsteuerungsinformationen einen Referenzwert zum Durchführen einer Kompensation an einem Signal der mindestens einen Hochfrequenzleitung angeben, wobei
die Verarbeitungseinheit (402) ferner dazu konfiguriert ist, mindestens eine Kompensationsdifferenz zwischen der mindestens einen ersten Zeitsteuerungsinformation und der Zielzeitsteuerungsinformation zu bestimmen; und
die Verarbeitungseinheit (402) ferner dazu konfiguriert ist, eine Verzögerungskompensation an einem Signal einer Hochfrequenzleitung, die der Kompensationsdifferenz entspricht und sich in der mindestens einen Hochfrequenzleitung befindet, basierend auf der mindestens einen Kompensationsdifferenz durchzuführen,
wobei die Empfangseinheit (401) speziell dazu konfiguriert ist:
nach einem Synchronisationssignal SS und/oder einem Rundfunksignal PBCH, das durch eine zweite Netzwerkvorrichtung (400) gesendet wird, basierend auf Frequenzinformationen zu suchen, wobei das SS und das PBCH abwechselnd durch die zweite Netzwerkvorrichtung (400) über die mindestens eine Hochfrequenzleitung gesendet werden; und
das SS und das PBCH zu analysieren, um die mindestens eine erste Zeitsteuerungsinformation der mindestens einen Hochfrequenzleitung zu erlangen.

6. Netzwerkvorrichtung (400) nach Anspruch 5, wobei die Verarbeitungseinheit (402) speziell dazu konfiguriert ist:
eine Verzögerungsdifferenz zwischen der mindestens einen ersten Zeitsteuerungsinformation und den zweiten Zeitsteuerungsinformationen zu berechnen; und
erste Zeitsteuerungsinformationen entsprechend einem Maximalwert als die Zielzeitsteuerungsinformationen aus der Verzögerungsdifferenz der mindestens einen Hochfrequenzleitung auszuwählen.

7. Netzwerkvorrichtung (400) nach Anspruch 5, wobei die Verarbeitungseinheit (402) speziell dazu konfiguriert ist:
eine Verzögerungsdifferenz zwischen der mindestens einen ersten Zeitsteuerungsinformation und den zweiten Zeitsteuerungsinformationen zu berechnen; und
die Zielzeitsteuerungsinformationen aus einem voreingestellten Wert auszuwählen, wobei die Zielzeitsteuerungsinformationen größer oder gleich ersten Zeitsteuerungsinformationen entsprechend einem Maximalwert in der mindestens einen Verzögerungsdifferenz sind.

8. Netzwerkvorrichtung (400) nach einem der Ansprüche 5 bis 7, wobei die Verarbeitungseinheit (402) speziell dazu konfiguriert ist:
das Signal der mindestens einen Hochfrequenzleitung zu puffern, wobei die Dauer des Pufferns basierend auf der Kompensationsdifferenz entsprechend der Hochfrequenzleitung bestimmt wird.

9. Netzwerksystem, wobei das Netzwerksystem eine erste Netzwerkvorrichtung (400) und eine zweite Netzwerkvorrichtung (400) umfasst, wobei
die erste Netzwerkvorrichtung (400) dazu konfiguriert ist, das Verfahren nach einem der Ansprüche 1 bis 4 durchzuführen, und die zweite Netzwerkvorrichtung (400) dazu konfiguriert ist, eine Operation durchzuführen, die durch die zweite Netzwerkvorrichtung (400) in dem Verfahren nach einem der Ansprüche 1 bis 4 durchgeführt wird.

10. Digitaler Verarbeitungschip, wobei der Chip einen Prozessor (501) und einen Speicher (502) umfasst, wobei der Speicher (502) und der Prozessor (501) über eine Leitung miteinander verbunden sind, wobei der Speicher (502) Anweisungen speichert und wobei der Prozessor (50) dazu konfiguriert ist, das Verfahren nach einem der Ansprüche 1 bis 4 durchzuführen.

11. Computerlesbares Speichermedium, umfassend Anweisungen, welche bei Ausführung durch einen Computer bewirken, dass der Computer das Verfahren nach einem der Ansprüche 1 bis 4 durchführt.

12. Computerprogrammprodukt, umfassend Anweisungen, welche bei Ausführung des Programms durch einen Computer bewirken, dass der Computer das Verfahren nach einem der Ansprüche 1 bis 4 durchführt.

## Revendications

1. Procédé de compensation de retard, comprenant :
l'obtention, par un premier dispositif réseau (400), d'au moins une première information de synchronisation d'au moins une ligne de radiofréquence d'un second dispositif réseau (400), dans lequel une ligne de radiofréquence correspond à une première information de synchronisation ;
la détermination, par le premier dispositif réseau (400), d'informations de synchronisation cible sur la base des premières informations de synchronisation et de secondes informations de synchronisation, dans lequel les secondes informations de synchronisation sont des informations de service de temps satellite du premier dispositif réseau (400), et les informations de synchronisation cible indiquent une valeur de référence pour réaliser une compensation de retard sur un signal de l'au moins une ligne de radiofréquence ;
la détermination, par le premier dispositif réseau (400), d'au moins une différence de compensation entre l'au moins une première information de synchronisation et les informations de synchronisation cible ; et
la réalisation, par le premier dispositif réseau (400) sur la base de l'au moins une différence de compensation, d'une compensation de retard sur un signal d'une ligne de radiofréquence qui correspond à la différence de compensation et qui se trouve dans l'au moins une ligne de radiofréquence,
dans lequel l'obtention, par un premier dispositif réseau (400), d'au moins une première information de synchronisation d'au moins une ligne de radiofréquence d'un second dispositif réseau (400) comprend :
la recherche, par le premier dispositif réseau (400) sur la base d'informations de fréquence, d'un signal de synchronisation, SS, et/ou d'un signal de diffusion, PBCH, envoyés par le second dispositif réseau (400), dans lequel le SS et/ou le PBCH sont alternativement envoyés par le second dispositif réseau (400) par le biais de l'au moins une ligne de radiofréquence ; et
l'analyse, par le premier dispositif réseau (400), du SS et/ou du PBCH pour obtenir l'au moins une première information de synchronisation de l'au moins une ligne de radiofréquence.

2. Procédé selon la revendication 1, dans lequel la détermination, par le premier dispositif réseau (400), d'informations de synchronisation cible, sur la base des premières informations de synchronisation et de secondes informations de synchronisation, comprend :
le calcul, par le premier dispositif réseau (400), d'une différence de retard entre l'au moins une première information de synchronisation et les secondes informations de synchronisation ; et
la sélection, par le premier dispositif réseau (400) à partir de la différence de retard de l'au moins une ligne de radiofréquence, de premières informations de synchronisation correspondant à une valeur maximale en tant qu'informations de synchronisation cible.

3. Procédé selon la revendication 1, dans lequel la détermination, par le premier dispositif réseau (400), d'informations de synchronisation cible, sur la base des premières informations de synchronisation et de secondes informations de synchronisation, comprend :
le calcul, par le premier dispositif réseau (400), d'une différence de retard entre l'au moins une première information de synchronisation et les secondes informations de synchronisation ; et
la sélection, par le premier dispositif réseau (400), des informations de synchronisation cible à partir d'une valeur prédéfinie, dans lequel les informations de synchronisation cible sont supérieures ou égales aux premières informations de synchronisation correspondant à une valeur maximale dans l'au moins une différence de retard.

4. Procédé selon l'une quelconque des revendications 1 à 3, dans lequel la réalisation, par le premier dispositif réseau (400) sur la base de l'au moins une différence de compensation, de la compensation de retard sur un signal d'une ligne de radiofréquence correspondant à chacune de l'au moins une ligne de radiofréquence comprend :
la mise en mémoire tampon, par le premier dispositif réseau (400), du signal de l'au moins une ligne de radiofréquence, dans lequel la durée de la mise en mémoire tampon est déterminée sur la base de la différence de compensation correspondant à la ligne de radiofréquence.

5. Dispositif réseau (400), comprenant :
une unité de réception (401), configurée pour obtenir au moins une première information de synchronisation d'au moins une ligne de radiofréquence d'un second dispositif réseau (400), dans lequel une ligne de radiofréquence correspond à une première information de synchronisation ; et
une unité de traitement (402), configurée pour déterminer des informations de synchronisation cible sur la base des premières informations de synchronisation et de secondes informations de synchronisation, dans lequel les secondes informations de synchronisation sont des informations de service de temps satellite du premier dispositif réseau (400), et les informations de synchronisation cible indiquent une valeur de référence pour réaliser une compensation sur un signal de l'au moins une ligne de radiofréquence, dans lequel
l'unité de traitement (402) est également configurée pour déterminer au moins une différence de compensation entre l'au moins une première information de synchronisation et les informations de synchronisation cible ; et
l'unité de traitement (402) est également configurée pour réaliser, sur la base de l'au moins une différence de compensation, une compensation de retard sur un signal d'une ligne de radiofréquence qui correspond à la différence de compensation et qui se trouve dans l'au moins une ligne de radiofréquence,
dans lequel l'unité de réception (401) est spécifiquement configurée pour :
rechercher, sur la base d'informations de fréquence, un signal de synchronisation, SS, et/ou un signal de diffusion, PBCH, envoyés par le second dispositif réseau (400), dans lequel le SS et/ou le PBCH sont alternativement envoyés par le second dispositif réseau (400) par le biais de l'au moins une ligne de radiofréquence ; et analyser le SS et le PBCH pour obtenir l'au moins une première information de synchronisation de l'au moins une ligne de radiofréquence.

6. Dispositif réseau (400) selon la revendication 5, dans lequel l'unité de traitement (402) est spécifiquement configurée pour :
calculer une différence de retard entre l'au moins une première information de synchronisation et les secondes informations de synchronisation ; et
sélectionner, à partir de la différence de retard de l'au moins une ligne de radiofréquence, des premières informations de synchronisation correspondant à une valeur maximale en tant qu'informations de synchronisation cible.

7. Dispositif réseau (400) selon la revendication 5, dans lequel l'unité de traitement (402) est spécifiquement configurée pour :
calculer une différence de retard entre l'au moins une première information de synchronisation et les secondes informations de synchronisation ; et
sélectionner les informations de synchronisation cible à partir d'une valeur prédéfinie, dans lequel les informations de synchronisation cible sont supérieures ou égales aux premières informations de synchronisation correspondant à une valeur maximale dans l'au moins une différence de retard.

8. Dispositif réseau (400) selon l'une quelconque des revendications 5 à 7, dans lequel l'unité de traitement (402) est spécifiquement configurée pour :
mettre en mémoire tampon le signal de l'au moins une ligne de radiofréquence, dans lequel la durée de la mise en mémoire tampon est déterminée sur la base de la différence de compensation correspondant à la ligne de radiofréquence.

9. Système de réseau, dans lequel le système de réseau comprend un premier dispositif réseau (400) et un second dispositif réseau (400), dans lequel
le premier dispositif réseau (400) est configuré pour réaliser le procédé selon l'une quelconque des revendications 1 à 4, et le second dispositif réseau (400) est configuré pour réaliser une opération réalisée par le second dispositif réseau (400) dans le procédé selon l'une quelconque des revendications 1 à 4.

10. Puce de traitement numérique, dans laquelle la puce comprend un processeur (501) et une mémoire (502), la mémoire (502) et le processeur (501) étant interconnectés par une ligne, la mémoire (502) stockant des instructions, et le processeur (50) étant configuré pour réaliser le procédé selon l'une quelconque des revendications 1 à 4.

11. Support de stockage lisible par ordinateur comprenant des instructions qui, lorsqu'elles sont exécutées par un ordinateur, amènent l'ordinateur à réaliser le procédé selon l'une quelconque des revendications 1 à 4.

12. Produit de programme informatique comprenant des instructions qui, lorsque le programme est exécuté par un ordinateur, amènent l'ordinateur à réaliser le procédé selon l'une quelconque des revendications 1 à 4.
